# EUROPÄISCHE PATENTANMELDUNG

(11) **EP 1 158 279 A1**
(43) Veröffentlichungstag der Anmeldung: **28.11.2001**
(21) Anmeldenummer: 00110817.4
(22) Anmeldetag: 22.05.2000
(51) Int. Cl.: G01F 1/60

(54) **Stromregel-Schaltung eines magnetisch-induktiven Durchflussmessgerät zum Erzeugen eines Speisestroms für eine Erreger-Schaltung**

(71) Anmelder: Endress + Hauser Flowtec AG, CH-4153 Reinach BL 1 (CH)
(72) Erfinder: Schweitzer, Joel, 68500 Issenheim (FR)
(74) Vertreter: Andres, Angelika

(57) **Zusammenfassung**

Die Stromregel-Schaltung erzeugt den Speisestrom mittels einer getakteten Einstell-Elektronik (12A) und mittels einer Steuer-Elektronik (12B), die ein entsprechendes pulsweitenmoduliertes Taktsignal (PWM₁) liefert. Die Einstell-Elektronik (12A) umfaßt dazu eine Speicherdrossel (L₁) und einen mit dieser gekoppelten Glättungskondensator (C₁). Mittels zweier elektronischer Schalter (S₁, S₂) der Einstell-Elektronik (12A) wird an die Speicherdrossel (L₁) alternierend ein Potential (U₁) oder ein Potential (U₂) angelegt, so daß ein die Speicherdrossel (L₁) durchfließenden Drosselstrom (i_{L1}) einen den Glättungskondensator (C₁) durchfließenden Wechselstromanteil und einen die Erreger-Schaltung (11) durchfließenden, als Speisestrom (i₁₁) dienenden Gleichstromanteil aufweist. Die vorgeschlagene Stromregel-Schaltung ist insb. für die Verwendung in einem eigensicheren und/oder feldbusfähigen magnetisch-induktiven Durchflußmeßgerät geeignet.

## Beschreibung

Die Erfindung betrifft eine Stromregel-Schaltung eines magnetisch-induktiven Durchflußmeßgeräts zum Erzeugen eines Speisestroms für eine Erreger-Schaltung.

Mittels derartiger Durchflußmeßgeräte läßt sich bekanntlich der Volumendurchfluß eines elektrisch leitfähigen Fluids messen, das ein Meßrohr eines magnetisch-induktiven Durchflußaufnehmers gerichtet durchströmt. Hierzu wird mittels einer an die Erreger-Schaltung und einer Magnetkreisanordnung ein Magnetfeld erzeugt, das das Fluid innerhalb eines Meßvolumens abschnittsweise, insb. im Bereich hoher Strömungsgeschwindigkeit, senkrecht zu dessen Strömungsrichtung durchsetzt und das sich im wesentlichen außerhalb des Fluids schließt. Zum Führen und wirksamen Einkoppeln des Magnetfeldes in das Meßvolumen umfaßt die Magnetkreisanordnung üblicherweise zwei Spulenkerne, die entlang eines Umfanges des Meßrohrs insb. diametral, voneinander beabstandet und mit jeweils einer freien endseitigen Stirnfläche, insb. spiegelbildlich, zueinander angeordnet sind. In die Spulenkerne wird das Magnetfeld mittels mindestens einer Erregerspule der Erreger-Schaltung so eingekoppelt, daß es das zwischen beiden Stirnflächen hindurchströmende Fluid wenigstens abschnittsweise senkrecht zur Strömungsrichtung durchsetzt.

Aufgrund der Bewegung der freien Ladungsträger des Fluids im Magnetfeld wird nach dem magneto-hydrodynamischen Prinzip im Meßvolumen ein elektrisches Feld von durchflußabhängiger Feldstärke erzeugt, das senkrecht zum Magnetfeld und senkrecht zur Strömungsrichtung des Fluids verläuft. Mittels zweier in Richtung des elektrischen Feldes voneinander beabstandet angeordneter Meßelektroden und mittels einer an diese angeschlossenen Auswerte-Schaltung ist somit eine im Fluid induzierte elektrische Spannung meßbar. Zum Abgreifen der induzierten Spannung dienen entweder das Fluid berührende, galvanische oder das Fluid nicht berührende, kapazitive Meßelektroden.

Von dieser Spannung werden in der Auswerte-Schaltung üblicherweise sowohl ein einen momentanen Volumendurchfluß als auch ein einen zeitlich integrierten, totalisierten Volumendurchfluß repräsentierendes Meßsignal abgeleitet. Diese Meßsignale werden bevorzugt an übergeordnete, prozeßbeobachtende und/oder prozeßleitende Informationssysteme in Form von digitalen Meßdaten übertragen. Hierzu ist das Durchflußmeßgerät an ein entsprechendes Datenübertragungs-System angeschlossen.

Im Betrieb des Durchflußmeßgerätes wird die Erreger-Schaltung üblicherweise von einem geregelten und/oder getakteten Gleichstrom gespeist. Zum Erzeugen des Magnetfelds wird dieser Gleichstrom in der Erreger-Schaltung in einen die Erregerspule intermittierend oder alternierend durchfließenden Erregersstrom umgewandelt. Derartige intermittierende oder alternierende Erregersströme können z.B. mittels einer an die Erregerspule angeschlossenen H- oder als T-Schaltung eingestellt werden, die den eingeprägten Gleichstrom zyklisch umpolen, vgl. z.B. die US-A 44 10 926 oder die US-A 60 31 740.

Ferner ist z.B. in der US-A 44 10 926 eine Stromregel-Schaltung eines magnetisch-induktiven Durchflußmeßgerätes gezeigt, die dem Erzeugen eines Speisestroms für eine Erreger-Schaltung mit wenigstens einer im Betrieb vom Erregerstrom durchflossenen Erregerspule dient, welche Stromregel-Schaltung umfaßt:
- eine Steuer-Elektronik,
   -- an die eingangsseitig ein den Erregerstrom repräsentierendes Erregerstromsignal und ein einen Referenzwert für den Erregerstrom repräsentierendes Referenzstromsignal angelegt ist und
   -- die ausgangsseitig ein pulsweitenmoduliertes erstes Taktsignal und ein zweites Taktsignal liefert, sowie
- eine Einstell-Elektronik
   -- mit einem Glättungskondensator und
   -- mit einem Schalter
- wobei die Einstell-Elektronik von einer Wechselspannung gespeist und vom ersten und zweiten Taktsignal gesteuert ist und
- wobei die Einstell-Elektronik den Speisestrom mittels des ersten Schalters einstellt, und
- wobei der Glättungskondensator temporär vom Speisestrom durchflossen ist.

Es hat sich jedoch gezeigt, daß der Wirkungsgrad von dem Einstellen des Gleichstroms dienenden Schaltregelungen bekannter magnetisch-induktiver Durchflußmeßgeräte für eine Verwendung in einem via Zweileiter-Stromschleife energieversorgten magnetisch-induktiven Durchflußmeßgerät zu gering ist. Mittels derartiger Zweileiter-Stromschleifen, wie z.B. die Standard-Schnittstelle RS-485 oder eine 4mA-bis-20mA-Stromschleife, werden, insb. eigensichere, Feldmeßgeräten bevorzugt an vorgenanntes Datenübertragungs-System angekoppelt und/oder mit Betriebsenergie versorgt. Als Datenübertragungs-Systeme können hierbei, insb. serielle, Feldbus-Systeme, wie z.B. PROFIBUS-PA, FOUNDATION FIELDBUS, CAN-BUS etc. sowie die entsprechenden Übertragungs-Protokolle dienen.

Ein Aufgabe der Erfindung ist es daher eine Stromregel-Schaltung anzugeben, die für die Verwendung in einem, insb. eigensicheren und/oder feldbusfähigen, magnetisch-induktiven Durchflußmeßgerät geeignet ist.

Zur Lösung dieser Aufgabe besteht die Erfindung in einer Stromregel-Schaltung eines magnetisch-induktiven Durchflußmeßgerätes zum Erzeugen eines Speisestroms für eine Erreger-Schaltung mit wenigstens einer im Betrieb vom Erregerstrom durchflossenen Erregerspule, welche Stromregel-Schaltung umfaßt:
- eine Steuer-Elektronik,
   -- an die eingangsseitig ein den Erregerstrom repräsentierendes Erregerstromsignal und ein einen Referenzwert für den Erregerstrom repräsentierendes Referenzstromsignal angelegt ist und
   -- die ausgangsseitig ein pulsweitenmoduliertes erstes Taktsignal liefert, sowie
- eine Einstell-Elektronik
   -- mit einer Speicherdrossel,
   -- mit einem Glättungskondensator,
   -- mit einem ersten Schalter und
   -- mit einem zweiten Schalter,
- wobei die Einstell-Elektronik von einer Zweileiter-Schnittstelle gespeist und vom ersten Taktsignal gesteuert ist und
- wobei die Einstell-Elektronik einen die Speicherdrossel durchfließenden Drosselstrom mittels des ersten Schalters und mittels des zweiten Schalters derart einstellt, daß
   -- der Glättungskondensator von einem Wechselstromanteil des Drosselstroms und
   -- die Erreger-Schaltung von einem den Speisestrom darstellenden Gleichstromanteil des Drosselstroms durchflossen ist.

Nach einer bevorzugten ersten Ausgestaltung der Erfindung ist der zweite Schalter mittels einer Diode überbrückt, die bei gleichzeitig geöffneten Schaltern vom Drosselstrom durchflossen ist.

Nach einer bevorzugten zweiten Ausgestaltung der Erfindung dient das erste Taktsignal zum Ansteuern des ersten Schalters und umfaßt bei der die Einstell-Elektronik eine Logik-Schaltung, die mittels des ersten Taktsignals ein zweites Taktsignal zum Ansteuern des zweiten Schalters erzeugt.

Ein Vorteil der Erfindung besteht in einem hohen Wirkungsgrad der Einstell-Elektronik, insb. auch während des Entladens des Glättungskondensators. Ein weiterer Vorteil der Erfindung ist eine hohe Dynamik der Einstell-Elektronik beim Einstellen des Speisestroms.

Die Erfindung wird im folgenden anhand eines Ausführungsbeispiels und der Figuren der Zeichnung beispielhaft näher beschrieben; es zeigen
- Fig. 1: Stromregel-Schaltung eines magnetisch-induktiven Durchflußmeßgerätes,
- Fig. 2: eine Ausgestaltung der Stromregel-Schaltung gemäß Fig. 1 und
- Fig. 3, bis 7: zeitliche Strom- oder Spannungsverläufe der Stromregel-Schaltung gemäß Fig. 1.

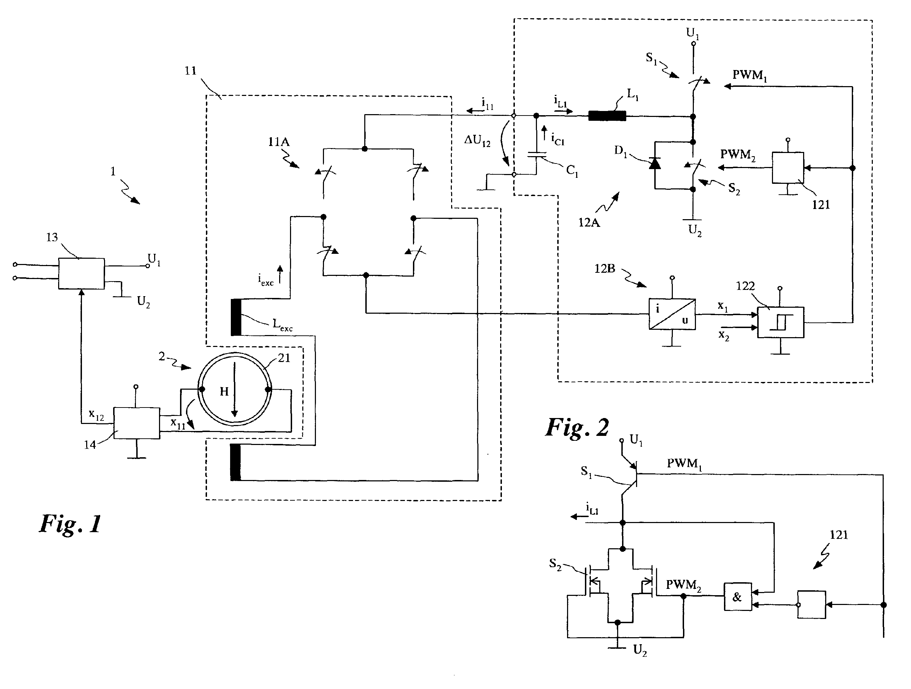

In der Fig. 1 ist ein Durchflußmeßgerät mit einer eine Meßgeräte-Elektronik 1 und mit einem magnetisch-induktiven Durchflußaufnehmer 2 schematisch dargestellt. Das Durchflußmeßgerät dient dazu, einen Volumendurchfluß eines in einer Rohrleitung strömenden Fluids mittels des Durchflußaufnehmers 2 zu erfassen und mittels der Meßgeräte-Elektronik ein vom Durchflußaufnehmer 2 erzeugtes Aufnehmersignal x₁₁ in ein den Volumendurchfluß repräsentierendes Meßsignal x₁₂ zu wandeln. Im Betrieb wird das Durchflußmeßgerät mittels einer von extern gespeisten Zweileiter-Stromschleife mit elektrischer Energie versorgt.

Zum Anschließen des Durchflußmeßgerätes an die Zweileiter-Stromschleife umfaßt die Meßgeräte-Elektronik 1 eine entsprechende Zweileiter-Schnittstelle 13. Als Zweileiter-Schnittstelle 13 kann z.B. eine Standard-Schnittstelle RS-485 oder eine 4mA-bis-20mA-Stromschleife dienen. Bei der Verwendung einer 4mA-bis-20mA-Stromschleife wird das Durchflußmeßgerät z.B. mit einer Spannung von 12 V betrieben und die einen der Versorgung des Durchflußmeßgerätes dienenden Grundstromanteil von in etwa 4 mA antreibt. Für diesen Fall ist das Durchflußmeßgerät somit mit einer elektrische Energie von 48 mW grundversorgt. Für den Fall einer Konfiguration als 4mA-bis-20mA-Stromschleife dient die Zweileiter-Schnittstelle 13 ferner dazu, daß Meßsignal x₁₂ in einen entsprechenden Signalstrom im Bereich von 4 mA bis 20 mA umzwandeln, welcher Signalstrom in die Zweileiter-Stromschleife eingeprägt ist.

Zum Übertragen des Meßsignals x₁₂ an ein nicht dargestelltes übergeordnetes Informationssystem, z.B. eine speicherprogrammierbare Steuerung und/oder ein Prozeßleitsystem, ist das Durchflußmeßgerät via Zweileiter-Schnittstelle 13 an einen ebenfalls nicht dargestellten, insb. seriellen, Feldbus, wie z.B. PROFIBUS-PA, FOUNDATION FIELDBUS, CAN-BUS etc., gekoppelt. Das Ankoppeln an den Feldbus kann entweder direkt, z.B. bei Verwendung der Standard-Schnittstelle RS-485, oder via REMOTE-I/O-Modul erfolgen. Zur Übertragung von Meßdaten vom und/oder von Einstelldaten für das Durchflußmeßgerät können dem Fachmann bekannte Smart-Protokolle, wie z.B. HART, INTENSOR etc., angewendet werden.

Der Durchflußaufnehmer 2 umfaßt gemäß Fig. 1 ein Meßrohr 21, dessen Lumen im Betrieb des Durchflußmeßgeräts von einem elektrisch leitfähigen Fluid durchströmt ist. Das Meßrohr 21 ist üblicherweise nicht-ferromagnetisch und wenigstens an der fluidberührenden Innenseite elektrisch isolierend ausgeführt.

Zum Messen des Volumendurchflußes wird ein Magnetfeld H von einstellbarer Feldstärke mittels einer am Meßrohr 21 angeordneten, insb. aus ferromagnetischen Blechen bestehenden, Magnetkreisanordnung in das Lumen des Meßrohrs 21 eingeleitet, und zwar derart, daß das Magnetfeld H das strömende Fluid abschnittsweise, insb. senkrecht, durchsetzt.

Aufgrund der Bewegung der freien Ladungsträger des Fluids durch das Magnetfeld H wird nach dem magneto-hydrodynamischen Prinzip im Meßvolumen ein elektrisches Feld erzeugt, das senkrecht zum Magnetfeld H und senkrecht zu einer Strömungsrichtung des Fluids verläuft. Mittels zweier in Richtung des elektrischen Feldes voneinander beabstandeter Elektroden ist somit eine im Fluid induzierte elektrische Meßspannung detektierbar, die als den Volumendurchfluß repräsentierendes Aufnehmersignal x₁₁ dient.

Der Aufbau und die Verwendung derartiger magnetisch-induktiver Durchflußaufnehmer 2 sind z.B. in der beschrieben US-A 55 40 103.

Das Magnetfeld H wird mittels einer Erreger-Schaltung 11 der Meßgeräte-Elektronik 1 erzeugt, die wenigstens eine, im Betrieb des Durchflußmeßgerätes von einem Erregerstrom durchflossenen Erregerspule L_{exc} umfaßt. Zur Unterdrückung von elektro-chemischen Störspannungen wird der Erregerstrom i_{exc} üblicherweise mittels einer Modulation-Schaltung, z.B. mittels H-Schaltung, in die Erregerspule L_{exc} wechselseitig eingespeist, so daß das mittels der Erreger-Schaltung 11 erzeugte Magnetfeld H praktisch ein in seiner Richtung alternierendes Magnetfeld ist, vgl. hierzu z.B. die US-A 44 10 926.

Zum Einstellen des Erregerstroms i_{exc} wird die Erreger-Schaltung 11 von einem geregelten Speisestrom i₁₁ gespeist. Als Speisestrom kann sowohl ein konstanter als auch ein veränderlicher Gleichstrom dienen, vgl. die US-A 60 31 740. Im Ausführungsbeispiel gemäß der Fig. 1 weist Speisestrom i₁₁ bevorzugt eine Stromstärke von in etwa 10 mA bis 20 mA. Selbstverständlich kann die Stromstärke des Speisestroms i₁₁, falls erforderlich, auch auf einen anderen Wert eingestellt sein.

Wie in Fig. 1 dargestellt, wird der Speisestrom i₁₁ von einer entsprechenden Stromregel-Schaltung geliefert, die eine Steuer-Elektronik 12B sowie eine Einstell-Elektronik 12A mit einer Speicherdrossel L₁ und mit einem Glättungskondensator C₁ umfaßt.

Die Einstell-Elektronik 12A liegt mit einem ersten Spannungsanschluß auf einem ersten Potential U₁, von z.B. 4 Volt, einer von der Zweileiter-Schnittstelle 13 gelieferten Gleichspannung und mit einem zweiten Spannungsanschluß auf einem zweiten Potential U₂ vorgenannter Gleichspannung, z.B. einem Massepotential von 0 Volt.

Die Einstell-Elektronik 12A umfaßt ferner einen ersten elektronischen Schalter S₁ und einen zweiten elektronischen Schalter S₂, welche beiden Schalter dazu dienen, im Betrieb das Potential U₁ oder das Potential U₂ auf einen ersten Anschluß der Speicherdrossel L₁ durchzuschalten.

In besonders vorteilhafter Weise ist der Schalter S₁, wie in Fig. 2 schematisch dargestellt, mittels eines Schalttranssistors vom pnp-Typ zu realisieren. Für diesen Fall ist ein bei gleichzeitig geschlossenem Schalter S₁ und S₂ in der Stromregel-Schaltung fließender Kurzschlußstrom auf z.B. 10 mA begrenzt. Als Schalter S₂ kann z.B. ein einziger Feldeffekt-Transistor oder zwei zueinander parallelgeschaltete und gleichgetakte Feldeffekt-Transistoren dienen, wobei die Feldeffekt-Transistoren bevorzugt jeweils vom Enhancement-n-Kanal-Typ sind.

Ein zweiter Spulenanschluß der Speicherdrossel L₁ ist, wie in Fig. 2 dargestellt, mit dem Glättungskondensator C₁ verbunden. Eine zwischen dem zweiten Spulenanschluß der Speicherdrossel L₁ und dem Potential U₂ abgegriffene Klemmenspannung entspricht somit einer, den Speisestrom i₁₁ treibenden Versorgungsspannung ΔU₁₂ für die Erreger-Schaltung 11.

Für den Fall, daß der nur erste Spannungsanschluß der Einstell-Elektronik 12A durchgeschaltet ist und der erste Spulenanschluß der Speicherdrossel L₁ somit praktisch ebenfalls auf dem Potential U₁ liegt, weist ein die Speicherdrossel L₁ durchfließender Drosselstrom i_{L1} einen den Glättungskondensator C₁ gleichfalls durchfließenden Ladestromanteil solange auf, bis der Glättungskondensator C₁ aufgeladen ist und somit der zweite Spulenanschluß der Speicherdrossel L₁ ebenfalls auf dem Potential U₁ liegt. Des weiteren wird der Glättungskondensator C₁ für den Fall, daß nur der zweite Spannungsanschluß der Einstell-Elektronik 12A durchgeschaltet ist und somit der erste Spulenanschluß in etwa das Potential U₂ annimmt, solange durch einen Entladestromanteil des Drosselstroms i_{L1} entladen, bis der zweite Spulenanschluß gleichfalls auf dem Potential U₂ liegt.

Zum Einstellen des Speisestroms i₁₁ sind beide Schalter S₁, S₂ derart angesteuert, daß stets höchstens einer der Schalter S₁, S₂ durchgeschaltet ist, d.h. daß höchstens einer der Schalter S₁, S₂ vom Drosselstrom i_{L1} momentan durchflossen ist. Dazu wird der Einstell-Elektronik 12A über einem Steuersignaleingang ein pulsweitenmoduliertes, insb. binäres, erstes Taktsignal PWM₁ angelegt. Im Ausführungsbeispiel gemäß Fig. 2 ist der Steuersignaleingang mittels einer Steuerelektrode des Schalters S₁ und mittels eines ersten Eingangs einer Logik-Schaltung 121 der Einstell-Elektronik 12A realisiert. Ausgangsseits ist die Logik-Schaltung 121 mit einer Steuerelektrode des Schalters S₂ verbunden.

Die Logik-Schaltung 121 dient dazu, ein binäres zweites Taktsignal PWM₂ an die Steuerelektrode des Schalters S₂ anzulegen, das höchstens dann einen den Schalter S₂ durchschaltenden Signalpegel annimmt, wenn das Taktsignal PWM₁ einen den Schalter S₁ öffnenden Signalpegel aufweist. Die Logik-Schaltung 121 kann dazu z.B. mittels eines einzigen Inverters, insb. mittels eines invertierenden Schmitt-Triggers, realisiert sein.

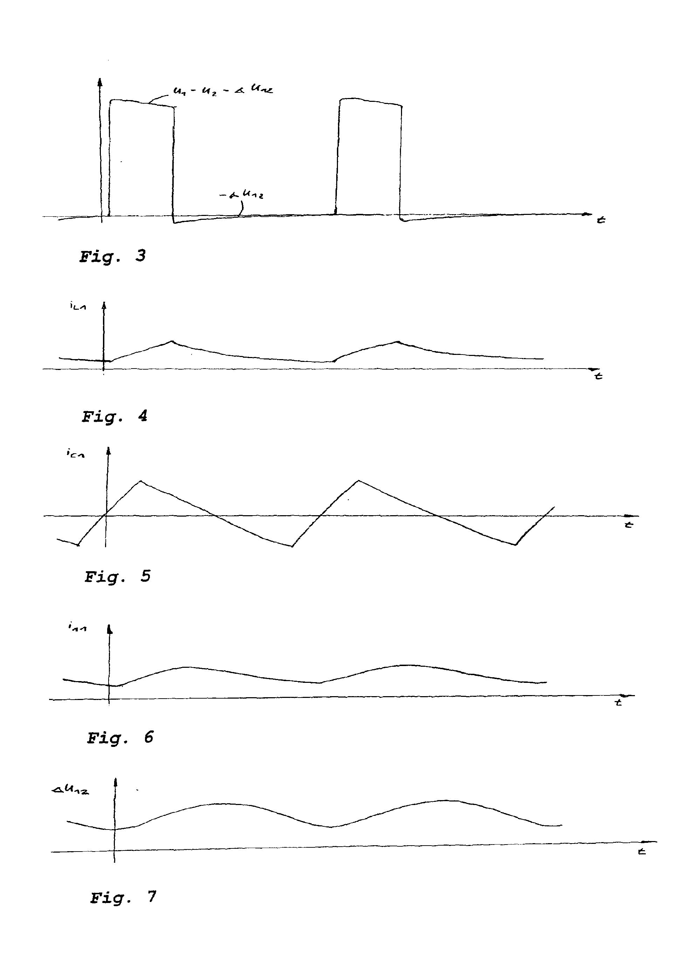

Bei einem derartigen, insb. alternierenden, Durchschalten beider Spannungsanschlüsse der Einstell-Elektronik 12A ist der Drosselstrom i_{L1}, wie in Fig. 4 schematisch dargestellt, als unipolarer Wechselstrom ausgebildet, der alternierend von einer ersten Potentialdifferenz U₁ - U₂ - ΔU₁₂ oder einer zweiten Potentialdifferenz -ΔU₁₂ getrieben wird, vgl. Fig. 3. Dabei weist der Drosselstrom i_{L1} einen entsprechenden, den Glättungskondensator C₁ gemäß Fig. 5 abwechselnd auf- oder entladenden Wechselstromanteil i_{C1} auf sowie einen die Erreger-Schaltung 11 als Gleichstrom i₁₁ durchfließenden Stromanteil auf, vgl. Fig. 6. Die Versorgungsspannung ΔU₁₂ nimmt dabei den in Fig. 7 dargestellten zeitlichen Verlauf einer pulsierenden Gleichspannung.

In vorteilhafter Weise sind die Taktsignale PWM₁, PWM₂ so ausgebildet, daß eine den Schalter S₁ oder den Schalter S₂ ausschaltende Signalflanke des einen Taktsignals PWM₁ bzw. PWM₂ stets mit einer geringfügigen zeitlichen Differenz, von z.B. 300 ns, von einer komplementären, den jeweils anderen Schalter S₁ bzw. S₂ einschaltende Signalflanke des anderen Taktsignals PWM₁ oder PWM₂ gefolgt ist. Somit sind beide Schalter S₁, S₂ für eine kurze Zeit, von z.B. 300 ns, geöffnet, wodurch insb. ein Kurzschluß der beiden Potentiale U₁, U₂ praktisch ausgeschlossen werden kann. Für den Fachmann ist klar, daß die schalter-einschaltenden Signalflanken je nach für die Schalter S₁, S₂ verwendeter Schalterlogik z.B. positive oder negative Signalflanken sein können; entsprechendes gilt auch für die schalterausschaltenden Signalflanken.

Bevorzugt ist die Logik-Schaltung 121 derart realisiert, daß das Taktsignal PWM₂ stets nur dann einen den Schalter S₂ einschaltenden Signalpegel annimmt, wenn das Taktsignal PWM₁ einen den Schalter S₁ ausschaltenden Signalpegel aufweist und wenn der erste Spulenanschluß in etwa auf dem Potential U₂ liegt.

Nach einer bevorzugten Ausgestaltung der Erfindung, umfaßt die Logik-Schaltung 121 dazu, wie in Fig. 2 für den Fall eines mittels des bereits erwähnten pnp-Transistors als öffner realisierten Schalters S₁ dargestellt, ein UND-Gatter mit einem ersten Eingang für das Taktsignal PWM₁.

Des weiteren weist die Logik-Schaltung 121 einen, insb. als invertierender Schmitt-Triggers ausgeführten, Inverter auf, der mit einem Eingang an den ersten Spulenanschluß und der mit einem Ausgang an einen zweiten Eingang des UND-Gatters gekoppelt ist. Durch eine derartige Konfiguration der das Taktsignal PWM₂ erzeugenden Logik-Schaltung 121, ergibt sich in vorteilhafter Weise eine gegenseitige Verriegelung der Schalter S₁, S₂, wobei der Schalter S₂ bei einem defekten, insb. durchgeschlagenen Schalter S₁ stets geöffnet bleibt.

Das Taktsignal PWM₁ wird gemäß Fig. 1 von der Steuer-Elektronik 12B erzeugt. Dazu werden mittels einer Komparator-Schaltung 122 der Steuer-Elektronik 12B, ein den Erregerstrom i_{exc} momentan repräsentierendes Erregerstromsignal x₁ und ein einen Referenzwert für den Erregerstrom i_{exc} repräsentierendes Referenzstromsignal x₂ miteinander verglichen. Das Erregerstromsignal x₁ kann z.B. wie in Fig. 1 gezeigt, mittels einer strom-zu-spannungswandelnden Verstärker-Schaltung der Steuer-Elektronik 12B erzeugt werden, die eine zum Erregerstrom i_{exc} proportionale Spannung über einem in Reihe zur Erregerspule L_{exc} geschalteten Sensewiderstand abgereift. Des weiteren kann als Referenzstromsignal x₂ z.B. eine eine fest eingestellte oder eine im Betrieb einstellbare Signalspannung dienen.

Ein ausgangsseits der Komparator-Schaltung 122 anliegendes zweiwertiges, pulsweitenmoduliertes Komparatorsignal kann, wie in Fig. 2 dargestellt, bereits als Taktsignal PWM₁ für die Einstell-Elektronik 12A dienen. Im Ausführungsbeispiel gemäß der Fig. 1 liefert die Komparator-Schaltung das Taktsignal PWM₁ mit einem den Schalter S₁ einschaltenden Signalpegel, z.B. logisch eins, wenn der Erregerstrom i_{exc} größer als der Referenzwert ist; anderenfalls weist das Taktsignal PWM₁ einen den Schalter S₁ ausschaltenden Signalpegel, z.B. logisch null, auf.

Nach einer weiteren bevorzugten Ausgestaltung der Erfindung ist der Schalter S₂ mittels einer Diode D₁ überbrückt, und zwar so, daß deren Anode praktisch auf dem Potential U₂ und deren Katode auf einem momentanen Potential des ersten Spulenanschlusses liegt. Die Diode D₁ dient dabei als ein Freilauf, der für den in der Fig. 1 angedeuteten Fall, daß die beiden Schalter S₁, S₂ gleichzeitig geöffnet sind, den Drosselstrom i_{L1} übernimmt. Dadurch wird sichergestellt, daß beim Öffnen des Schalters S₁ oder des Schalters S₂ die Versorgungsspannung ΔU₁₂, insb. für den Fall das gleichzeitig beide Schalter S₁, S₂ geöffnet sind, keine unzulässig hohen Spitzenwerte annimmt.

Ein Vorteil der erfindungsgemäßen Stromregel-Schaltung, besteht darin, daß deren Wirkungsgrad, nämlich das Verhältnis einer in die Erreger-Schaltung 11, insb. in die Erregerspule L_{exc} eingespeisten, Leistung zu einer Eingangsleistung der Stromregel-Schaltung über eine gesamte Taktperiode, insb. auch während der Pulspause ein Wirkungsgrad von etwa 90% erreicht; d.h. dieser Wirkungsgrad ist nahezu unabhängig vom Puls-Pause-Verhältnis des Taktsignals PWM₁.

Die erfindungsgemäße Stromregel-Schaltung ist aufgrund ihres hohen Wirkungsgrades besonders für eine Verwendung in einem, insb. eigensicheren, magnetisch-induktiven Durchflußmeßgerät geeignet, das im Betrieb über eine Zweileiter-Schnittstelle, z.B. eine 4mA-bis-20mA-Stromschleife, mit elektrischer Energie von z.B. 48 mW versorgt ist.

## Patentansprüche

1. Stromregel-Schaltung eines magnetisch-induktiven Durchflußmeßgerätes zum Erzeugen eines Speisestroms (i₁₁) für eine Erreger-Schaltung (11) mit wenigstens einer im Betrieb von einem Erregerstrom (i_{exc}) durchflossenen Erregerspule (L_{exc}), welche Stromregel-Schaltung umfaßt:
- eine Steuer-Elektronik (12B),
-- an die eingangsseitig ein den Erregerstrom (i_{exc}) repräsentierendes Erregerstromsignal (x₁) und ein einen Referenzwert für den Erregerstrom repräsentierendes Referenzstromsignal (x₂) angelegt ist und
-- die ausgangsseitig ein pulsweitenmoduliertes erstes Taktsignal (PWM₁) liefert, sowie
- eine Einstell-Elektronik (12A)
-- mit einer Speicherdrossel (L₁),
-- mit einem Glättungskondensator (C₁),
-- mit einem ersten Schalter (S₁) und
-- mit einem zweiten Schalter (S₂),
- wobei die Einstell-Elektronik (12A) von einer Zweileiter-Schnittstelle (13) gespeist und vom ersten Taktsignal (PWM₁) gesteuert ist und
- wobei die Einstell-Elektronik (12A) einen die Speicherdrossel (L₁) durchfließenden Drosselstrom (i_{L1}) mittels des ersten Schalters (S₁) und mittels des zweiten Schalters (S₂) derart einstellt, daß
-- der Glättungskondensator (C₁) von einem Wechselstromanteil des Drosselstroms (i_{L1}) und
-- die Erreger-Schaltung (11) von einem den Speisestrom (i₁₁) darstellenden Gleichstromanteil des Drosselstroms (i_{L1}) durchflossen ist.

2. Stromregel-Schaltung nach Anspruch 1, bei der der zweite Schalter (S₂) mittels einer Diode (D₁) überbrückt ist, die bei gleichzeitig geöffneten Schaltern (S₁, S₂) vom Drosselstrom (i_{L1}) durchflossen ist.

3. Stromregel-Schaltung nach Anspruch 1,
- bei der das erste Taktsignal (PWM₁) zum Ansteuern des ersten Schalters (S₁) dient und
- bei der die Einstell-Elektronik (12A) eine Logik-Schaltung (121) umfaßt, die mittels des ersten Taktsignals (PWM₁) ein zweites Taktsignal (PWM₂) zum Ansteuern des zweiten Schalters (S₂) erzeugt.
